# EUROPEAN PATENT APPLICATION

(11) **EP 4 640 322 A1**
(43) Date of publication of application: **29.10.2025**
(21) Application number: 25172043.9
(22) Date of filing: 23.04.2025
(51) Int. Cl.: B07C 5/02, B07C 5/342, B07C 5/36, B25J 9/16

(54) **SYSTEM AND METHOD FOR CLASSIFYING AND SORTING PRINTED CIRCUIT BOARDS DESTINED FOR RECYCLING**

(30) Priority: 24.04.2024 IT 202400009484
(71) Applicant: HIRO Robotics S.r.l., 16121 Genova (GE) (IT)
(72) Inventor: Olivieri, Michele, 16121 Genova (GE) (IT); Labolani, Davide, 16121 Genova (GE) (IT)
(74) Representative: Bottino, Giovanni

(57) **Abstract**

Plant for classifying and sorting electronic boards (1) intended for recycling comprising a conveyor belt (3), a control unit comprising a first artificial vision module provided with at least one first camera (4), which first camera (4) is oriented towards the conveyor belt (3), a gripping and movement device (5) located downstream of the first camera (4), which gripping and movement device (5) is provided with at least one gripping head (50) and is controlled by said control unit. Said control unit comprises a second artificial vision module provided with at least one second camera (6) and configured to identify at least part of the components present on an electronic board (1) or other features of the electronic board (1), the first artificial vision module being configured to recognize the electronic boards (1) arranged with said components facing the conveyor belt and the control unit being configured to control the gripping device (5) to sequentially pick up the electronic boards (1) arranged with said components facing the conveyor belt (3) from the conveyor belt (3), to place each electronic board (1) with said components in the field of view of the second camera (6), and to sort said electronic board (1) on the basis of said components or said characteristics identified by the second artificial vision module.

## Description

The present invention relates to a plant for classifying and selecting objects, in particular electronic boards, in order to efficiently manage their sorting based on the components present on each electronic board.

In particular, the present invention relates to a plant for classifying and sorting electronic boards intended for recycling, which plant comprises a support frame, a conveyor belt coupled to said frame and defining a sliding direction. The plant comprises a control unit comprising a first artificial vision module provided with at least one first camera, which first camera is oriented such that it comprises at least a portion of the conveyor belt in its field of view, and a gripping and movement device coupled to said frame and located downstream of the first camera with respect to said sliding direction, which gripping and movement device is controlled by said control unit. Said control unit comprises a second artificial vision module provided with at least one second camera and configured to identify at least part of the components present on an electronic board or other features of the electronic board.

The treatment and recycling of electrical and electronic equipment (Waste Electrical and Electronic Equipment - WEEE) represents a fundamental part of waste management in the modern context, considering the exponential increase in the production of electronic devices and their rapid obsolescence.

These processes involve a first phase of collection of electrical and electronic waste, which can take place through municipal recycling programs, dedicated collection points or through collection by producers or distributors. After collection, the waste is sorted by type and category. This process may involve the separation of materials to facilitate subsequent treatment and recycling. Electrical and electronic waste is then subjected to specific treatments. These may include disassembly and separation of components, removal of harmful substances such as lead and mercury, and grinding in order to reduce them into smaller fragments. After the initial treatment, precious materials such as gold, silver, copper and other metals present in the electronic devices are recovered. These materials can be extracted through melting processes, chemical separation or other techniques. The recovered materials are then sent to recycling centres to be transformed into raw materials that can be used in the production of new products. This process reduces reliance on natural resources and reduces the environmental impact associated with extracting new materials. Finally, it is essential to properly manage residual waste and hazardous substances that may have been extracted during the treatment and recycling process. This may include proper disposal of waste and prevention of environmental pollution.

The main challenges in the treatment and recycling of WEEE include the management of hazardous substances, such as electronic boards or PCBs and heavy metals, the improvement of the efficiency of recycling processes, the involvement of all stakeholders in the supply chain to ensure proper management of electronic waste, and the promotion of public awareness and education on the importance of recycling and proper management of electronic waste.

Every year, in the world, more than 47 million tons of electrical and electronic waste are treated in an unknown and non-ecological way, according to the Global E-Waste Monitor. Modern technologies such as robotics and artificial intelligence can be adapted to be applied to the world of electronic waste treatment and recycling. By classifying electronic board waste based on its value, recycling plants can improve the efficiency of the recycling process.

The present invention falls into this technological context and aims to realise a plant that is able to identify the components of the electronic boards and to sort the electronic boards accordingly. This approach is aimed at simplifying the process of component recovery and recycling, enabling more effective management of resources and a reduction in waste.

Currently, the process of selecting electronic boards is mostly done manually, involving personnel specialized in visually inspecting the boards in order to classify them based on the components and materials present. However, this method is laborious and requires a considerable number of specialized operators, exposing them to difficult working conditions and health and safety risks. In addition, the time required to complete the process is significant due to the complexity and variety of materials to be handled.

The need for an automated and efficient solution for the selection of electronic boards is evident. Known technologies, such as systems based on optical, colour, or shape recognition, already exist that can be used for this purpose.

Document WO2017120815A1 describes a plant for recycling electronic boards and printed circuits, in which metals can be recovered.

Document CN107470170A discloses a sorting system and method for electronic board detection based on artificial vision. The system comprises a detection device based on artificial vision and a robotic sorting device provided with a suction head connected to a vacuum pump for picking up electronic boards.

Document CN216225554U describes a device for the detection and multi-angle selection of printed circuits (PCB), belonging to the technical field of defect control in PCBs. The device uses multiple cameras arranged with different shooting angles to acquire images of the PCBs, to detect three-dimensional defects, such as those at the welding points. The cameras and the mechanical arms are positioned along the direction of the conveyor belt, to prevent the arms from obstructing the view of the cameras or interfering with the operation of the arms.

Document WO2021198053A1 describes a robotic system designed to pick up objects of random shape and size from a continuous and disordered flow, and then place them individually and aligned on an induction belt or directly on a sorting system. The system is equipped with a robotic actuator that moves a manipulator able to adapt to different objects. A control system processes a 3D image of the objects present upstream of the robot station, identifies the individual objects and selects which one to pick up based on parameters obtained from the image, such as shape and size.

Electronic boards, however, are elements of very variable geometry and difficult to grip. This is especially true with vacuum gripping heads, because the electronic components present on the electronic board create a very uneven surface, on which the suction cup or suction cups of the vacuum gripping head are very difficult to grip. The suction cups, in fact, need to have a surface as flat and smooth as possible to be able to adhere creating the vacuum and thus generate an effective grip and such as to pick up and move the piece. In general, not only the devices provided with vacuum gripping heads, but also those provided with other gripping types, such as grippers or the like, have difficulty acting on the electronic boards due to the presence of components on the electronic boards themselves.

The present invention aims to solve these disadvantages of the plants currently known in the state of the art with a plant as described at the beginning, wherein furthermore the first artificial vision module is configured to recognize the electronic boards arranged with the said components facing the conveyor belt. The control unit being configured to control the gripping device to sequentially pick up the electronic boards arranged with said components facing the conveyor belt from the conveyor belt, to place each electronic board with said components in the field of view of the second camera and to sort said electronic board on the basis of said components identified by the second artificial vision module and/or said other features identified by the second artificial vision module.

The present invention arises from recognizing that electronic boards are usually provided with welded or integrated components only on a first face, while the opposite face, devoid of such components, has a much flatter and more homogeneous surface, on which a vacuum gripping head can be much more effective.

The plant therefore aims to analyse the conveyor belt by means of artificial vision, to identify the electronic boards present therein and discriminate which electronic boards have the components in the direction of the conveyor belt. Only these boards are then picked up by means of an easy automatic grip on the face devoid of components. The first artificial vision analysis, however, is not able to classify the electronic boards that have the components facing the conveyor belt, precisely because they are hidden. The gripping and movement device then orients each electronic board picked up so as to present it to the second artificial vision module with the components in view. The second artificial vision module can at this point analyse and classify the board, and the gripping and movement device can sort it accordingly.

The classification of the electronic boards picked up, and their consequent sorting, takes place on the basis of the recognized components and/or other features that may be overall features of the board such as for example colour, density of components, presence of metal tracks, or the like.

In an advantageous embodiment, said gripping head is a vacuum gripping head.

The face without components of the electronic boards constitutes in fact an optimal flat surface to provide a stable and wide extension base on which the gripping head can firmly adhere using the vacuum. This ensures a secure and stable grip of the electronic board without the risk of slipping or falling during lifting and transport. The pressure distribution of the gripping head is uniform, reducing the risk of deformation or damage during the lifting process.

In one embodiment the gripping and movement device is a manipulator robot. A manipulator robot is a type of programmable machine designed to perform manipulation, handling and assembly operations of objects or materials in industrial or commercial environments. These robots are characterized by mechanical arms with joints and actuators that allow them to move in a precise and controlled way in the three-dimensional space.

In a preferred embodiment the gripping and movement device is a delta robot.

Delta robots are known for their speed of movement and feature high motion accuracy. They can quickly perform gripping and positioning operations, allowing for greater efficiency in the sorting process of the electronic boards. Delta robots are designed to be highly flexible and can easily adapt to different types of tasks and work environments and, due to their compact design and slim structure, require less space than other types of industrial robots. Because of their modular structure and simplified design, delta robots are generally easy to maintain. This reduces downtime due to mechanical failures and allows for greater plant business continuity.

In a further exemplary embodiment, said gripping head is articulated in such a way that it is adapted to orient the electronic board picked up within the field of view of the second camera.

This guarantees a high ease of manipulation of the piece picked up by the gripping and movement device and allows the second camera to be positioned in any position with respect to the rest of the plant during the design or installation phase, as long as it is within the range of action of the gripping and movement device.

In a further preferred embodiment, the gripping and movement device is an industrial robotic arm.

An industrial robotic arm is provided with a plurality of joints that make it similar in structure to an anthropomorphic arm and give it considerable flexibility and ability to move.

An executive example of an industrial robotic arm is a six-axis robot that can move in six independent directions along the x, y, and z axes, as well as rotate about each of these axes. This allows the robot to reach very precise positions and orientations and perform more natural and fluid movements. Thanks to its six-joint structure, the robot can reach a wide range of positions and angles and manipulate complex objects with multiple orientations and uneven surfaces.

The gripping and movement device may however be another type of manipulator robot, such as for example an anthropomorphic robot, a Cartesian robot, a gantry robot.

The gripping and movement device may be a collaborative robot. A collaborative robot is designed to work safely close to humans without the need for safety barriers, with the advantage that it can be easily integrated into existing work environments and collaborate directly with human operators, increasing efficiency and safety in the workplace.

According to an embodiment said first camera is located above the conveyor belt.

The elevated position of the camera makes it possible to obtain an optimal viewing angle on the electronic boards in transit on the conveyor belt. This allows the camera to capture clear and detailed images, allowing for better accuracy in analysing and recognizing electronic boards.

According to an executive example, the second camera is located above the conveyor belt and oriented with its optical axis parallel to the conveyor belt.

This positioning is optimal for placing the boards picked up in the field of view of the second camera in an easy way by the gripping and movement device.

An object of the present invention is also a method for classifying and sorting electronic boards intended for recycling, comprising the following steps:
a) deposition of one or more electronic boards on a conveyor belt;
b) identification by means of a first artificial vision module of the electronic boards on the conveyor belt;
c) identification by means of said first artificial vision module of the electronic boards arranged with the components facing the conveyor belt;
d) gripping by means of a robot provided with a gripping head of an electronic board arranged with the components facing the conveyor belt;
e) orientation of the electronic board picked up at the previous step with the components facing in the field of view of a second artificial vision module;
f) identification of the components or other features of the electronic board and classification of said electronic board on the basis of the identified components or said other features identified by means of said second artificial vision module;
g) sorting of the electronic board on the basis of the classification of this electronic board.

In an exemplary embodiment, step c) comprises the following steps:
c1) acquisition of images of the electronic board (1);
c2) detection in said acquired images of predetermined visual features of the electronic board (1);
c3) association with said predetermined visual features of components or absence of components;
c4) assignment to the electronic board (1) of a state of position with the components facing the conveyor belt (3) or of position with the components facing away from the conveyor belt (3) on the basis of the presence or absence of components.

In an exemplary embodiment, step f) comprises the following steps:
f1) acquisition of images of the electronic board (1);
f2) detection in said acquired images of predetermined visual features of the electronic board (1);
f3) association with said predetermined visual features of known components;
f4) classification of the electronic board (1) on the basis of the presence of predetermined components or other features of the electronic board (1).

These and other features and advantages of the present invention will become clearer from the following disclosure of some exemplary embodiments illustrated in the accompanying drawings, wherein:

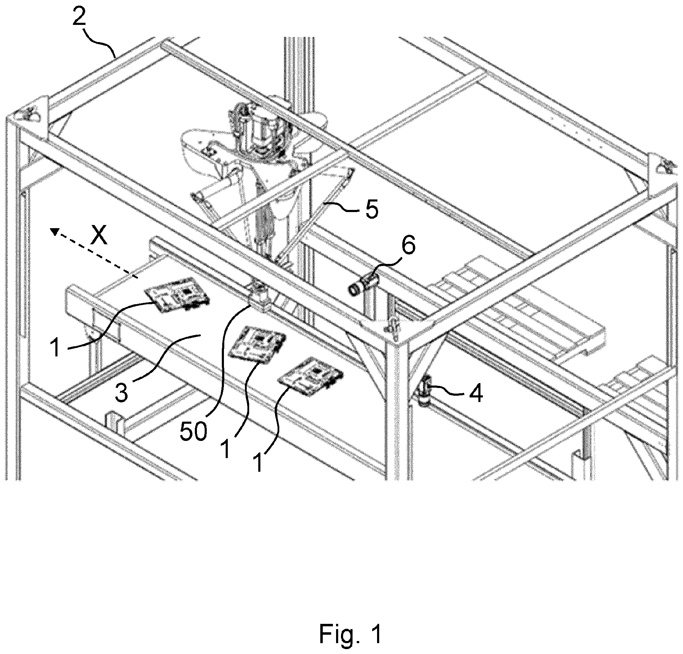

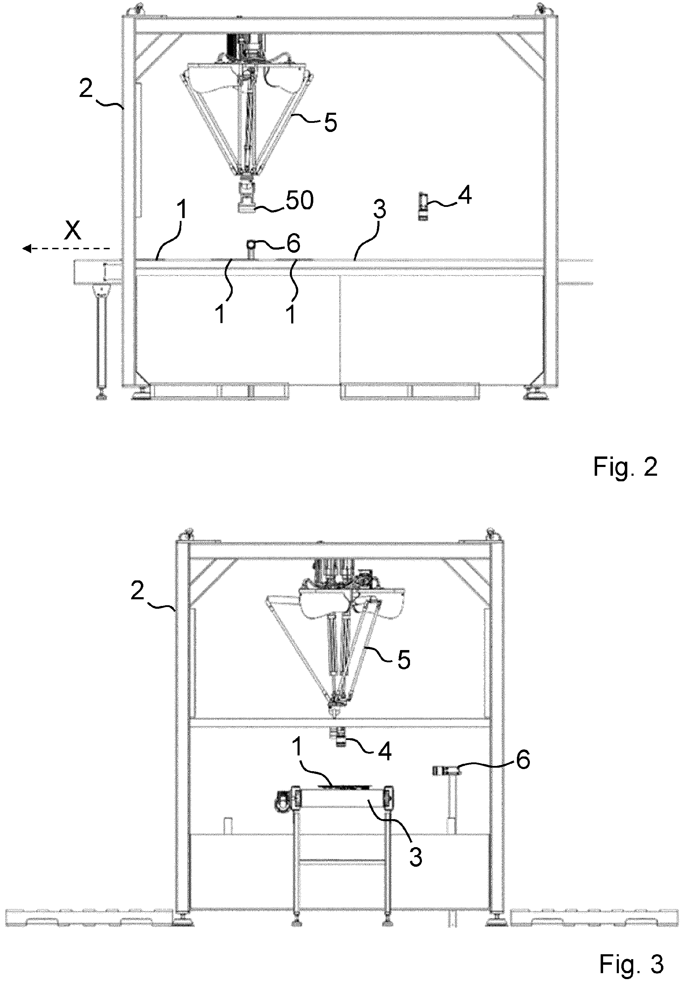

figs 1, 2 and 3 illustrate different views of an exemplary embodiment of a plant;
figs. 4 and 5 illustrate two different views of the plant with an electronic board picked up and analysed for classification and subsequent sorting.

The plant for classifying and sorting electronic boards 1 intended for recycling illustrated in the figures comprises a support frame 2 that defines a support structure for resting on the ground all the mechanical and electronic components of the plant. The support frame can be of any shape, preferably it is made up of an electro-welded monobloc carpentry and provided with support bases on the ground.

The plant comprises a conveyor belt 3 coupled to the frame 2 and defining a sliding direction X indicated with the dashed arrow in the figures. The conveyor belt 3 is advantageously arranged on a horizontal plane, so as to define a support and transport plane for the electronic boards 1 avoiding relative movements between the conveyor belt 3 and the electronic boards 1 themselves, but it is obvious to the person skilled in the art that the arrangement of the conveyor belt 3 can be varied, for example with a slight inclination, depending on the design needs of the plant.

A gripping and movement device 5 is coupled to the frame 2. The gripping and movement device is advantageously arranged above the conveyor belt 3, but can also be provided in lateral positions or even not coupled with the frame 2.

Preferably, as illustrated in the figures, the gripping and movement device 5 is a delta robot, ideal for rapid and precise movement. The control unit takes care of generating the trajectories of the robot based on the information provided by the artificial vision modules.

The approach and the gripping of the electronic board 1 by the gripping and movement device 5 takes place while the conveyor belt 3 is in motion.

The gripping and movement device 5 is provided with at least one vacuum gripping head 50.

A vacuum gripping head 50 is a component used in industrial robots to grasp and manipulate objects of various sizes and shapes and functions to create a vacuum between the surface of the object and the gripping head 50 itself.

The process begins with the creation of a pressure difference between the gripping head 50 and the surrounding environment. This is achieved by using a vacuum generating pump incorporated in the system of the robot 5, not illustrated in the figure. The pump suctions air into the gripping head 50, thus creating a vacuum.

Once the vacuum has been generated, the gripping head 50 is positioned above the object to be grasped, in particular an electronic board 1. The electronic board 1 is then attracted towards the gripping head 50 by the pressure difference, creating an adhesion between the surface of the electronic board 1 and the gripping head 50.

Once the electronic board 1 has been grasped by the vacuum gripping head 50, the robot 5 can lift it and transport it to the desired destination. The vacuum created by the gripping head 50 firmly holds the electronic board 1 in position during movement of the robot 5.

Once the electronic board 1 has been positioned in the desired position, the vacuum is stopped and the air pressure is restored inside the gripping head 50. This allows the electronic board 1 to be released in a controlled and precise manner.

The vacuum gripping head 50 can be controlled and adjusted so as to suit the characteristics of the electronic boards 1 to be grasped, such as size, shape and weight. This can be done by adjusting the amount of vacuum generated, the arrangement of the suction cups in the gripping head 50, and other operating parameters.

The plant provides for a control unit, not illustrated in the figures, intended to control the movements of the gripping and movement device 5 on the basis of a processing based on an artificial vision of the electronic boards 1 to be sorted, in particular on the basis of two independent artificial vision modules.

An artificial vision module is a technological system designed to emulate the human ability to visually perceive and interpret objects and the surrounding environment. This type of system uses digital cameras, image processing algorithms, and analysis software to acquire, process, and interpret visual information.

The process begins by acquiring images using digital cameras. Images may be colour or grayscale, or even infrared or hyperspectral ones, depending on the information needed for analysis.

The acquired images can undergo a series of pre-processing operations to improve quality and facilitate subsequent analysis. These operations may include lighting corrections, noise reduction, contrast and sharpness adjustment.

Once acquired and pre-processed, the images are analysed to extract the relevant characteristics of the objects present in the environment. This may include contour localization, object segmentation, shape extraction, and other features relevant to the specific application.

The extracted features are then used to recognize and classify objects in the environment. This can be done using machine learning techniques, such as artificial neural networks or supervised learning algorithms, which have previously been trained on a data set of known examples.

Once objects have been recognized and classified, the artificial vision module can make decisions based on the information obtained. This may include triggering specific actions by other systems, such as controlling a gripping robot to manipulate the identified objects.

The system can also be designed to provide performance feedback, allowing it to continuously optimize and improve its detection and analysis capabilities.

The plant that is the subject-matter of the present invention therefore uses artificial intelligence to identify the components and materials of value on each electronic board 1, allowing precise separation on the basis of specific criteria that can be chosen, for example, by entities involved in the recycling of the materials obtained. By classifying the waste of the electronic boards 1 based on their value, the recycling plants can improve the efficiency of the recycling process.

Using industrial artificial vision, the plant is able to accurately identify the perimeter of individual printed boards within a moving mixed flow on a conveyor belt 3, enabling efficient selection and recovery of materials of value for electronic board 1 recycling. The plant was trained with thousands of images of printed boards and their assembled components, which allowed the system to recognize them autonomously with a high degree of accuracy, making the recycling process of electronic boards 1 more efficient and effective.

The control unit comprises a first artificial vision module provided with at least one first camera 4.

The first camera 4 is oriented in such a way that it comprises at least a portion of the conveyor belt 3 in its own field of view, in particular positioned above the conveyor belt 3 and oriented towards it, in a position upstream of the gripping and movement device 5 with respect to the sliding direction X. Preferably the first camera 4 is positioned with its own view axis perpendicular to the conveyor belt 3 and in a central position with respect to the width thereof. A plurality of first cameras 4 may be provided to cover a wider view area. It is possible to integrate the first artificial vision module with other types of sensors such as infrared or hyperspectral optics, the data of which can be fused with the data of the first camera 4 to increase the number of features identified and optimize the recognition of different components.

The control unit comprises a second artificial vision module provided with at least one second camera 6.

The second camera 6 is advantageously located near the gripping and movement device 5.

The second camera 6 is located above the conveyor belt 3 and is oriented with its own optical axis parallel to the conveyor belt 3. The second camera 6 may optionally be oriented in such a direction that it does not comprise the conveyor belt 3 in its own field of view.

The second artificial vision module can be integrated with other types of sensors such as infrared or hyperspectral optics, whose data can be fused with the data from the second camera 6 to increase the number of features identified and optimize the recognition of different components and the consequent classification of electronic boards.

The first artificial vision module is configured to recognize and locate the electronic boards 1 arranged with the components facing the conveyor belt. This is performed by an initial acquisition of images of the electronic board 1, a segmentation of the individual electronic boards 1 from the flow, a subsequent detection in the captured images of predetermined visual features of the electronic board 1. A presence of components or absence of components is automatically associated with these predetermined visual features. In this way the first artificial vision module proceeds by assigning to the electronic board 1 a position state on the basis of the presence or absence of components detected: a first position state with the components facing the conveyor belt 3 or a second position state with the components facing in the opposite direction to the conveyor belt 3. The components are identified using artificial intelligence algorithms.

The second artificial vision module is configured to identify at least part of the components present on an electronic board 1 or other features of the electronic board 1, so as to carry out a classification aimed at sorting.

This is performed by an initial acquisition of images of the electronic board 1, a detection in the acquired images of predetermined visual features of the electronic board 1, and the association with said predetermined visual features of known components or other features. Through artificial intelligence algorithms, the identification of the components is carried out as well as the identification of overall features of the board such as colour, density of components, presence of metal tracks.

A classification of the electronic board 1 is then carried out on the basis of the presence of predetermined components and/or predetermined features as described above, for example by means of programming for examples by an entity receiving the sorted electronic boards or by the installer.

The control unit receives the information from the first artificial vision module and is configured to control the gripping and movement device 5 on the basis of this information. In particular, the gripping and movement device 5 picks up from the conveyor belt 3 sequentially the electronic boards 1 arranged with the components facing the conveyor belt 3 and places each electronic board 1 with the components in the field of view of the second camera 6. This is allowed by the fact that the first artificial vision module identifies the position on the conveyor belt 3 of the electronic boards 1, also discriminating between the two position states for each electronic board 1, and the fact that the sliding speed of the conveyor belt 3 is known.

Advantageously, the gripping head 50 is articulated with respect to the rest of the gripping and movement device 5 and is thus adapted to orient the picked up electronic board 1 within the field of view of the second camera 6.

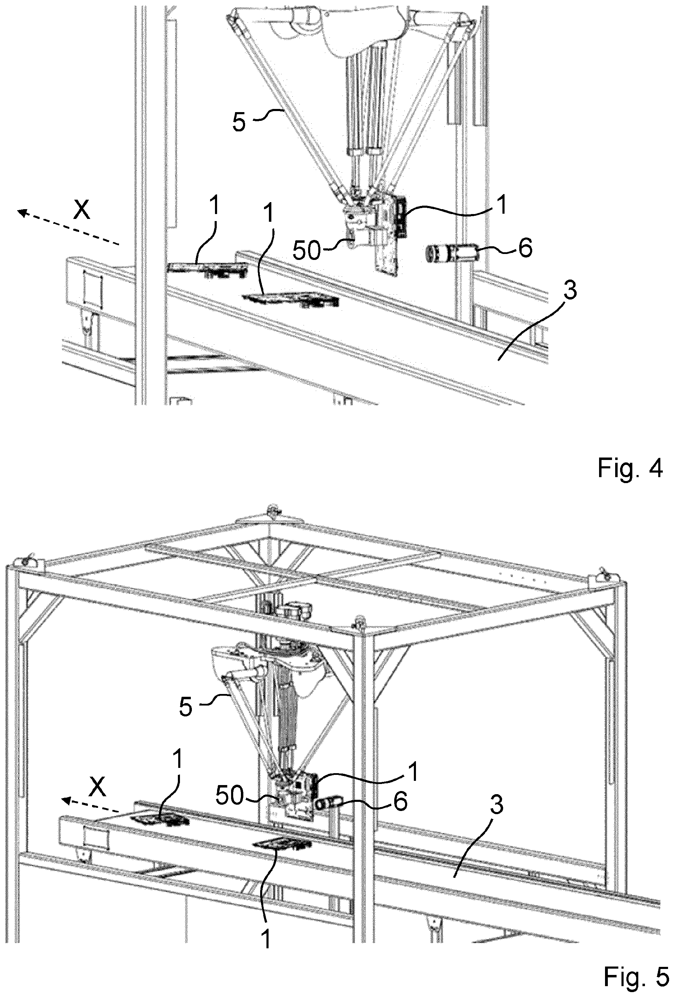

This is illustrated in figures 4 and 5, where an electronic board 1 has been picked up from the conveyor belt 3 by the gripping and movement device 5 and has been temporarily positioned in the field of view of the second camera 6 so as to carry out the analysis by the second artificial vision module.

The control unit receives the information from the second artificial vision module and is configured to control the gripping and movement device 5 on the basis of this information. In particular, the gripping and movement device 5 sorts the picked up electronic board 1 on the basis of the components identified by the second artificial vision module.

The plant provides for two or more different sorting zones, for example two basket containers not illustrated in the figure, in which the gripping and movement device 5 can alternatively deposit the picked up electronic board 1 on the basis of the results of the analysis carried out by the second artificial vision module.

The operation of the plant initially provides for a deposition of one or more electronic boards 1 on the conveyor belt 3. The first artificial vision module provided with the first camera 4 identifies the electronic boards 1 on the conveyor belt 3 and identifies the electronic boards 1 arranged with the components facing the conveyor belt 3. The gripping and movement device 5 provided with a vacuum gripping head 50 picks up an electronic board 1 arranged with the components facing the conveyor belt 3 and orients it with the components facing in the field of view of the second camera 6. The second artificial vision module identifies the components on the electronic board 1 and classifies this electronic board 1 on the basis of the identified components. The electronic board 1 is then finally sorted on the basis of the classification carried out.

## Claims

1. Plant for classifying and sorting electronic boards (1) intended for recycling, which plant comprises
a support frame (2),
a conveyor belt (3) coupled to said frame (2) and defining a sliding direction (X),
a control unit comprising a first artificial vision module provided with at least one first camera (4), which first camera (4) is oriented such that it comprises at least a portion of the conveyor belt (3) in its field of view,
a gripping and movement device (5) coupled to said frame (2) and placed downstream of the first camera (4) with respect to said sliding direction (X), which gripping and movement device (5) is provided with a gripping head (50) and is controlled by said control unit,
said control unit comprising a second artificial vision module provided with at least a second camera (6) and configured to identify at least part of the components present on an electronic board (1) or other features of the electronic board (1),
**characterized in that**
the first artificial vision module configured to recognize the electronic boards (1) arranged with said components facing the conveyor belt and the control unit being configured to control the gripping device (5) to sequentially pick up the electronic boards (1) arranged with said components facing the conveyor belt (3) from the conveyor belt (3), to place each electronic board (1) with said components in the field of view of the second camera (6) and to sort said electronic board (1) on the basis of said components identified by the second artificial vision module and/or said other features identified by the second artificial vision module.

2. Plant according to Claim 1, wherein said gripping head (50) is a vacuum gripping head.

3. Plant according to Claim 1 or 2, wherein the gripping and movement device (5) is a delta robot or industrial robotic arm.

4. Plant according to Claim 2 or 3, wherein said gripping head (50) is articulated in such a way that it is adapted to orient the picked up electronic board (1) within the field of view of the second camera (6).

5. Plant according to one or more of the preceding claims, wherein said first camera (4) is located above the conveyor belt (3).

6. Plant according to one or more of the preceding claims, wherein the second camera (6) is located above the conveyor belt (3) and oriented with its own optical axis parallel to the conveyor belt (3).

7. Method for classifying and sorting electronic boards (1) intended for recycling,
**characterized in that**
it comprises the following steps:
a) deposition of one or more electronic boards (1) on a conveyor belt (3);
b) identification by means of a first artificial vision module of the electronic boards (1) on the conveyor belt (3);
c) identification by means of said first artificial vision module of the electronic boards (1) arranged with the components facing the conveyor belt (3);
d) gripping by means of a robot (5) provided with a gripping head (50) of an electronic board (1) arranged with the components facing the conveyor belt (3);
e) orientation of the electronic board picked up (1) at the previous step with the components facing in the field of view of a second artificial vision module;
f) identification of the components or other features of the electronic board (1) and classification of said electronic board (1) on the basis of the identified components or said other features identified by means of said second artificial vision module;
g) sorting of the electronic board (1) on the basis of the classification of this electronic board (1).

8. Method according to Claim 7, wherein step c) comprises the following sub-steps:
c1) acquisition of images of the electronic board (1);
c2) detection in said acquired images of predetermined visual features of the electronic board (1);
c3) association with said predetermined visual features of components or absence of components;
c4) assignment to the electronic board (1) of a state of position with the components facing the conveyor belt (3) or of position with the components facing away from the conveyor belt (3) on the basis of the presence or absence of components.

9. Method according to Claim 7 or 8, wherein step f) comprises the following steps:
f1) acquisition of images of the electronic board (1);
f2) detection in said acquired images of predetermined visual features of the electronic board (1);
f3) association with said predetermined visual features of known components;
f4) classification of the electronic board (1) on the basis of the presence of predetermined components or other features of the electronic board (1).
